# EUROPEAN PATENT APPLICATION

(11) **EP 1 880 896 A2**
(43) Date of publication of application: **23.01.2008**
(21) Application number: 07021803.7
(22) Date of filing: 29.04.2005
(51) Int. Cl.: B60N 2/66, B60N 2/48

(54) **Integrated lumbar and active headrest system**

(30) Priority: 30.04.2004 US 567238 P
(62) Divisional of application: 05740941.9
(71) Applicant: L&P Property Management Company, South Gate, CA 90280 (US)
(72) Inventor: Swan, David, Windsor Ontario N8P 1K8 (CA); McMillen, Robert J., Tecumseh Ontario N8N 4Y3 (CA); Colja, Renato, Windsor Ontario N9G 2G7 (CA); Certossi, Stephen, Belle River Ontario N0R 1A0 (CA); Sami, Asad, LaSalle Ontario N9H 2P9 (CA); Kukurozovic, George, Windsor Ontario N9E 4S5 (CA); Rencz, Bogdan, Windsor Ontario N8Z 5S5 (CA)
(74) Representative: Banzer, Hans-Jörg

(57) **Abstract**

An integrated active headrest/lumbar seating system (22) includes an active headrest system (10) supported within a seat frame (12) of a vehicle. The active headrest system (10) includes an energy transfer mechanism (14) that connects the headrest (16) to the lumbar support (18). The lumbar support (18) is operated by an actuator (20). The energy transfer mechanism (14) includes a pair of linkages (26), a pair of side bars (30) and a crossbar (34). The linkages (25) connect to the headrest (16) and the pair of side bars (30) extend from the pair of linkages (26) along the side rails (32) of the seat frame (12) to the crossbar (34). The crossbar (34) connects the pair of side bars (30) and is situated at the middle section (40) of the lumbar support (18). The lumbar support (18) can fit between the side bars (30).

## Description

### Cross-Reference to Related Applications

This application claims the benefit of U.S. Provisional Application No. 60/567,238 filed on April 30, 2004 which is incorporated herein by reference.
**Statement Regarding Federally Sponsored Research or Development.**
Not Applicable.
**Appendix.**
Not Applicable.

### Background of the Invention

### 1. Field of the Invention

This invention relates generally to active headrest systems and, more particularly, to active headrest systems combined with lumbar support devices.

### 2. Related Art

Active headrest systems (AHRS) with energy transfer mechanisms are generally known in seat support systems to improve the safety of vehicle passengers in the event of a collision, and improvements have been made to reduce injuries to the neck region of the passenger. In the event of a rearward impact, the occupant of a seat in the vehicle is forced against the seat. Generally, the pelvis and lumbar regions of the occupant initially exert more force on the seatback than do the thoracic or shoulder regions of the occupant, and this initial reaction may separate the seatback from the thoracic, neck, and head regions of the occupant. In some rear impact situations, the upper torso, neck, and head of the passenger can then be forced back into the seatback, resulting in a whiplash effect. Accordingly, dynamic or active headrest mechanisms have been developed to reduce the negative effects of a rearward collision.

Most head restraint systems include a reaction plate or a reaction bar that is supported by the seatback frame in the region generally corresponding to the shoulder position of the occupant. The reaction device is pivotally mounted to a linkage which connects to the headrest. During a rearward collision, the force of the occupant pushes on the plate or bar and actuates the linkage to move the headrest upward and forward toward the head of the occupant, thereby reducing the separation between the seatback and the occupant.

A number of active head restraint systems, such as disclosed in U.S. Patent Nos. 5,378,043, 6,199,947 and 6,565,150, do not integrate a lumbar support with the reaction device whereas other active headrest systems have been combined with lumbar support devices, such as disclosed in U.S. Patent Nos. 5,884,968, 6,375,262 and 6,837,541. Most combinations of active headrest systems with lumbar support devices still require the same discrete energy transfer mechanism and do not use the lumbar support device as an integral part of active headrest system when in a collision mode of operation. Additionally, these combinations are usually limited to a particular type of lumbar device that must be designed specifically according to the active headrest system which can limit the flexibility and range of travel of any such lumbar support system that is incorporated into the AHRS.

Accordingly, there remains a need for a lumbar support system to be integrated with an AHRS in a manner that will not limit the flexibility and range of travel of the lumbar support. Additionally, there is always a need for reducing the cost of devices and finding ways to eliminate assemblies. For example, some assemblies that have been required as a discrete unit based on traditional design methodologies, but when the design process is considered in a different way, some discrete units can actually be replaced by other devices that can perform the same function, making the traditionally discrete unit redundant. Accordingly, the elimination of such a redundant element can save costs in the manufacture and in the maintenance of the system.

### Summary of the Invention

It is in view of the above problems that the present invention was developed. The invention is an improved active headrest system having a headrest, an energy transfer mechanism, and a lumbar device. In the improved system, the lumbar support has a set of operating positions that are not in direct contact with the energy transfer mechanism and another set of impact positions that are in contact with the energy transfer mechanism.

In the present invention, the lumbar support is in a cooperative relationship with a crossbar in the energy transfer mechanism. In particular, to activate the energy transfer mechanism, the lumbar support moves the crossbar which extends inwardly from a pair of side bars. The lumbar support of the present invention is also different from the prior art because the side bars are outside the periphery of the lumbar support. With the side bars outside the lumbar support periphery, the range of travel of the lumbar support is increased and the flexibility of the lumbar support is improved in that different types of devices can be used within the allotted space for the lumbar support.

Instead of connecting the energy transfer mechanism to the top of the lumbar device or the sides of the lumbar device as taught by the prior art systems, the present invention discloses an energy transfer mechanism which has side bars outside the periphery of the lumbar support. According to the present invention, the lumbar support acts against a crossbar that extends inwardly from the side bars which extend along the seat frame.

Furthermore, according to an aspect of the invention, a seating system is provided. The seating system comprises a seat frame comprising a pair of side rails and a top beam, a plurality of support wire sections connected to the seat frame, an energy transfer mechanism comprising a pair of side bars, a pair of linkages, and a crossbar connected between said pair of side bars, wherein said pair of side bars extend along said side rails from a pair of linkages proximate to said top beam to said crossbar distal from said top beam, a head rest supported by said top beam of said seat frame and connected to said energy transfer mechanism through said pair of linkages, a lumbar support attached to said frame through said plurality of support wire sections and spaced from said crossbar by said support wire sections, and an actuator operatively connected to said lumbar support, said actuator moving said lumbar support from a first position to a second position.

Preferably, the lumbar support comprises a front side, a back side, a top section, a bottom section and a middle section therebetween, where a periphery of said lumbar support is located inside said pair of side bars, said crossbar connecting said pair of side bars.

The middle section may be located proximate to said crossbar.

Preferably, said support wire sections surround said periphery of said lumbar support and attach said crossbar to said lumbar support, said crossbar comprising a pair of crossbar sections connected between said pair of side bars through said support wire sections.

According to another aspect of the invention, a seat support system comprises a headrest, an energy transfer mechanism operatively connected to said headrest, a lumbar support, said lumbar support having a set of operating positions and a set of impact positions, wherein said set of operating positions is not in contact with said energy transfer mechanism and wherein said set of impact positions is in contact with said energy transfer mechanism, and an actuator operatively connected to said lumbar support, said actuator moving said lumbar support through said set of operating positions.

Preferably, the seat support further comprises a plurality of support wire sections connected to said lumbar support.

Furthermore, said energy transfer mechanism may comprise a crossbar connecting a pair of side bars, said pair of side bars connected to said headrest through a pair of linkages, said crossbar situated behind said wire sections and said lumbar support, wherein said lumbar support contacts said energy transfer mechanism through said crossbar in said set of impact positions.

Further features and advantages of the present invention, as well as the structure and operation of various embodiments of the present invention, are described in detail below with reference to the accompanying drawings.

### Brief Description of the Drawings

The accompanying drawings, which are incorporated in and form a part of the specification, illustrate the embodiments of the present invention and together with the description, serve to explain the principles of the invention. In the drawings:
Figures 1A-1C illustrates one embodiment of the present invention;
Figures 2A-2C illustrates another embodiment of the present invention;
Figures 3-7 are views of the present invention using different lumbar supports;
Figure 8 is a cross-sectional view of the embodiment illustrated in Figure 2A; and
Figure 9 is a cross-sectional view of the embodiment illustrated in Figure 6.

### Detailed Description of the Preferred Embodiments

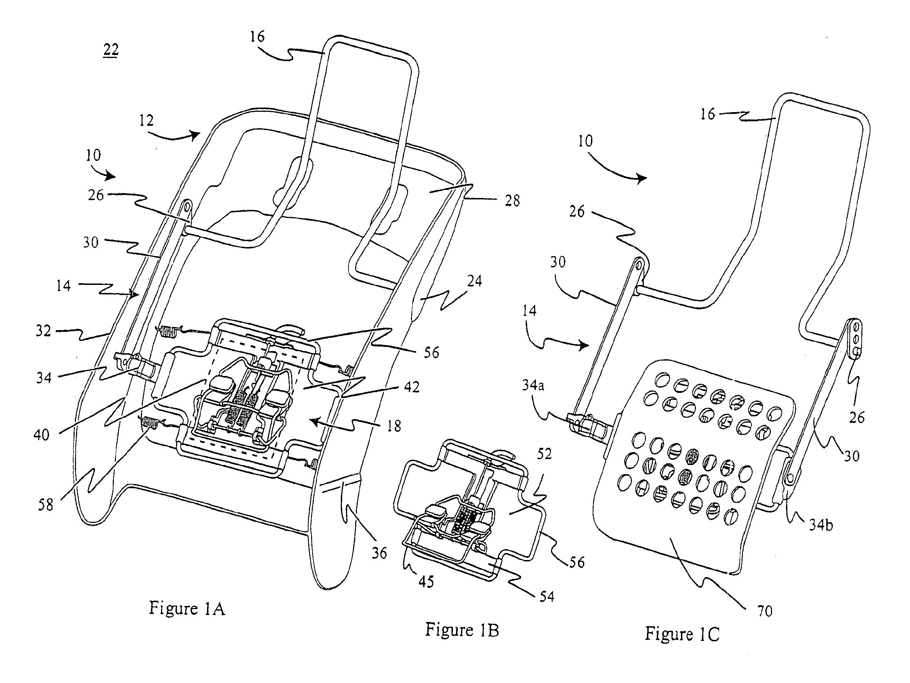

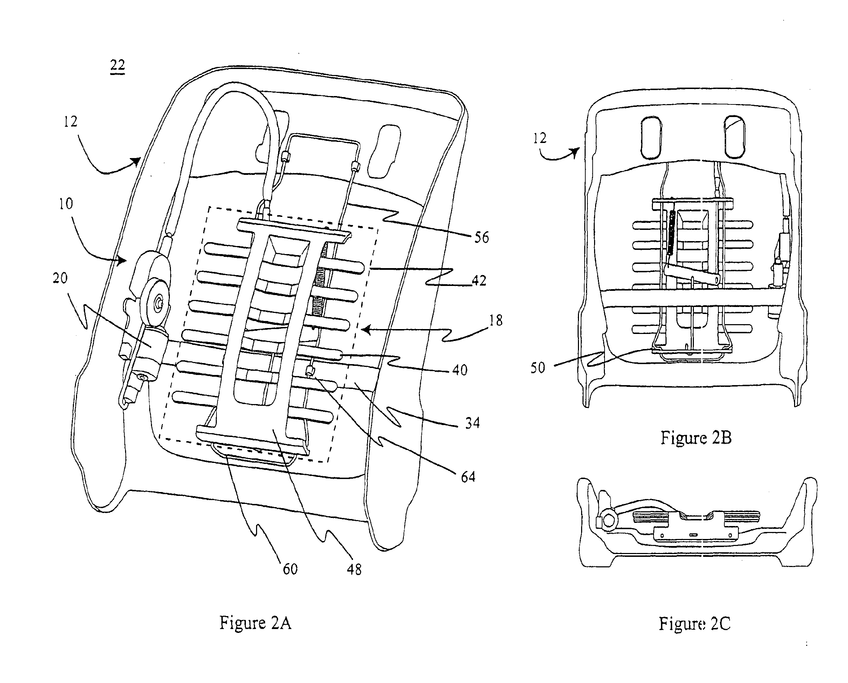

Referring to the accompanying drawings in which like reference numbers indicate like elements, each of the embodiments described below with reference to the corresponding illustrations is for an active headrest system 10 that can be adapted to fit into the seat frame 12 of any vehicle. In Figures 1 and 2, the active headrest system 10 is shown to include an energy transfer mechanism 14 that connects the headrest 16 to the lumbar support 18. The lumbar support 18 is operated by an actuator 20. Generally, the active headrest system 10 combined with the seat frame 12 and the actuator 20 is an integrated active headrest/lumbar seating system 22.

At the upper end 24 of the seat frame 12, a pair of linkages 26 connects the energy transfer mechanism 14 to the headrest 16 which is supported at the upper end 24 by a top beam 28. A pair of side bars 30 extend from the corresponding pair of linkages 26 along the side rails 32 of the seat frame 12 to a crossbar 34. The crossbar 34 connects the pair of side bars 30 at the lower end 36 of the seat frame 12. Accordingly, the pair of linkages 26 are closer to the top beam 24 the upper end 24 of the seat frame 12, closer to the top beam 28, whereas the crossbar 34 is positioned in the lower end 36 of the seat frame 12. At the bottom of the seat frame 12, there may also be a crossbeam 38. The lumbar support 18 is integrated into the active headrest system 10 through its placement in the seat frame 12 relative to the side bars 30 and the crossbar 34. Specifically, the middle section 40 of the lumbar support 18 is situated proximate to the crossbar 34. The lumbar support 18 fits entirely within the side bars 30 such that the pair of side bars 30 are outside the periphery 42 of the lumbar support 18. Therefore, according to the present invention, the lumbar support 18 can be selected from many designs and still function in the active headrest system 10. As respectively illustrated in Figures 1A and 1B, the lumbar support 18 is moved from a retracted position 44 to an extended position 46. Similarly, the actuator 20 can operate the lumbar support 18 illustrated in each of the other drawings.

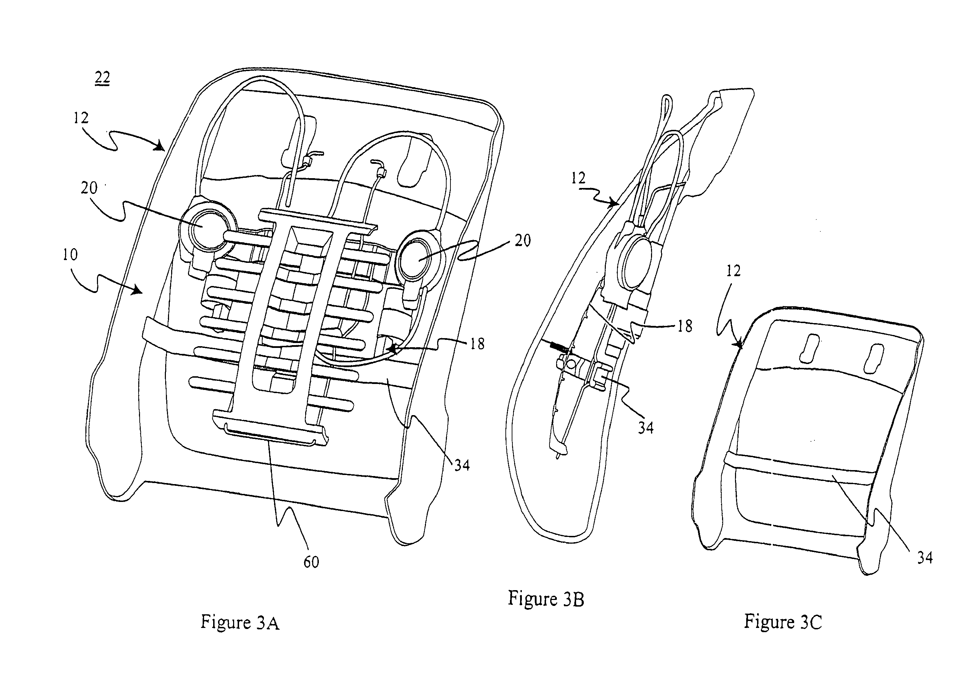

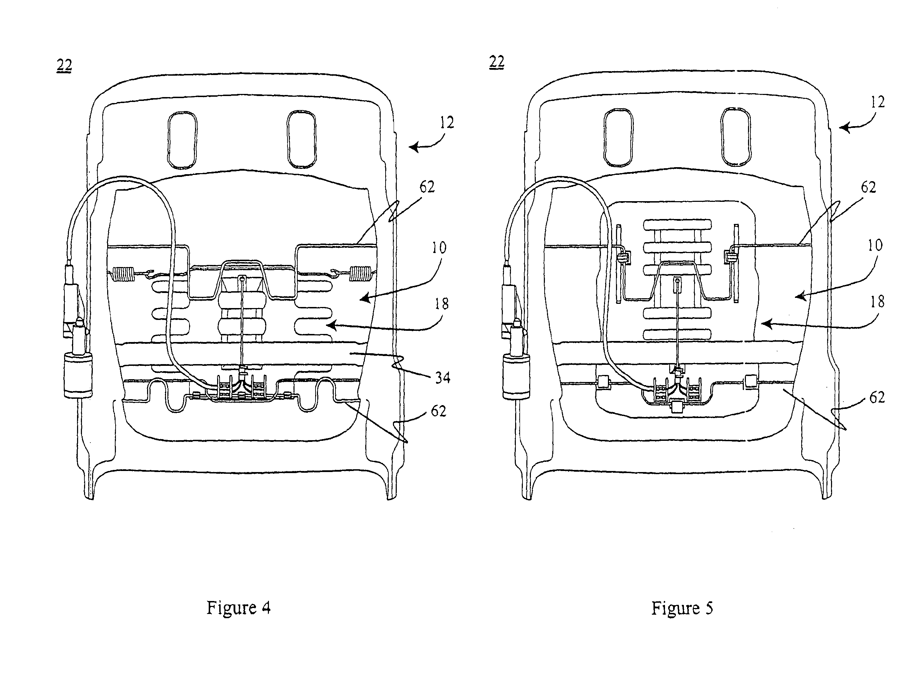

A front side 48 of the lumbar support 18 is shown in Figure 2A and the back side 50 of the lumbar support 18 is shown in Figure 2B. The front side of the lumbar support is also shown in Figure 2C with a bottom view of the seating system 22. Additionally, the front side is shown in Figures 1 and 3, and the back side is shown in Figures 4 and 5. The top section 52 and the bottom section 54 of the lumbar support 18 are connected to the seat frame 12 through support wire sections 56. The support wire sections 56 can attach the lumbar support to the seat frame by any number of formations. As illustrated in Figure 1, the support wire sections 56 can completely surround the periphery 42 of the lumbar support 18, having sections on the top, bottom and each side that are preferably connected to each other. In this embodiment, coil springs 58 connect the wire sections 56 to the seat frame 12, and the support wire sections 56 connect the lumbar support 18 to a pair of crossbar sections 34a, 34 b. In the other embodiments, the crossbar 34 is situated behind the lumbar support 18 and the support wire sections 56 are located between the crossbar 34 and the lumbar support 18. As illustrated in Figures 2 and 3, a continuous support wire 60 can be doubled over and formed into a u-shape that is attached to the seat frame 12 at the top beam 28. As illustrated in Figures 4 and 5, a pair of support wires 62 can span the seat frame 12 between the side rails 32, with the upper support wire being connected to the top section 52 of the lumbar support 18 and the lower support wire being connected to the bottom section 52 of the lumbar support 18. In these embodiments, the upper support wire is angled which allows the top section of the lumbar support to slide.

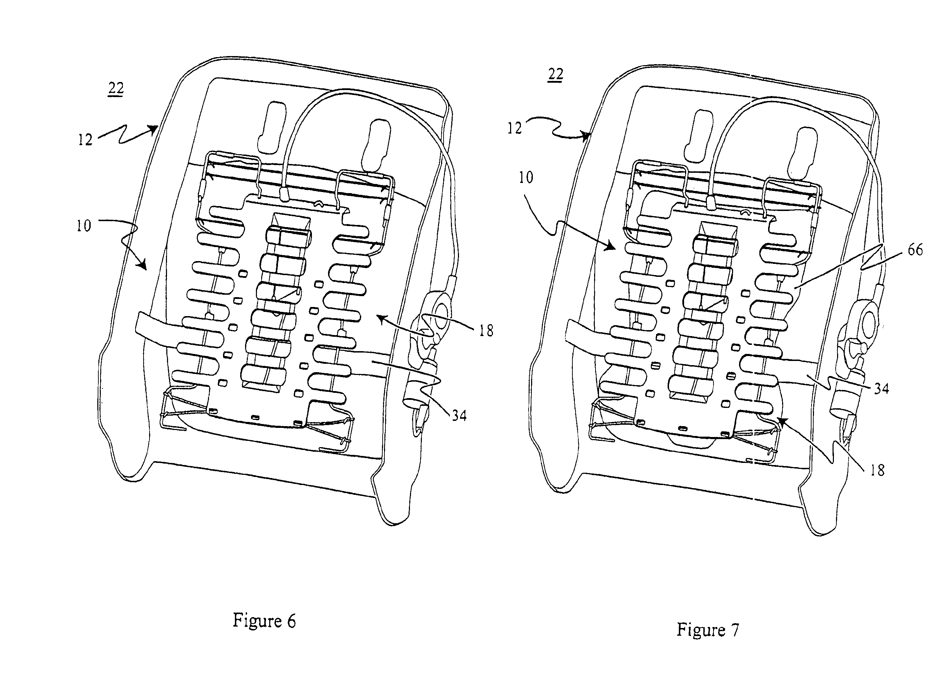

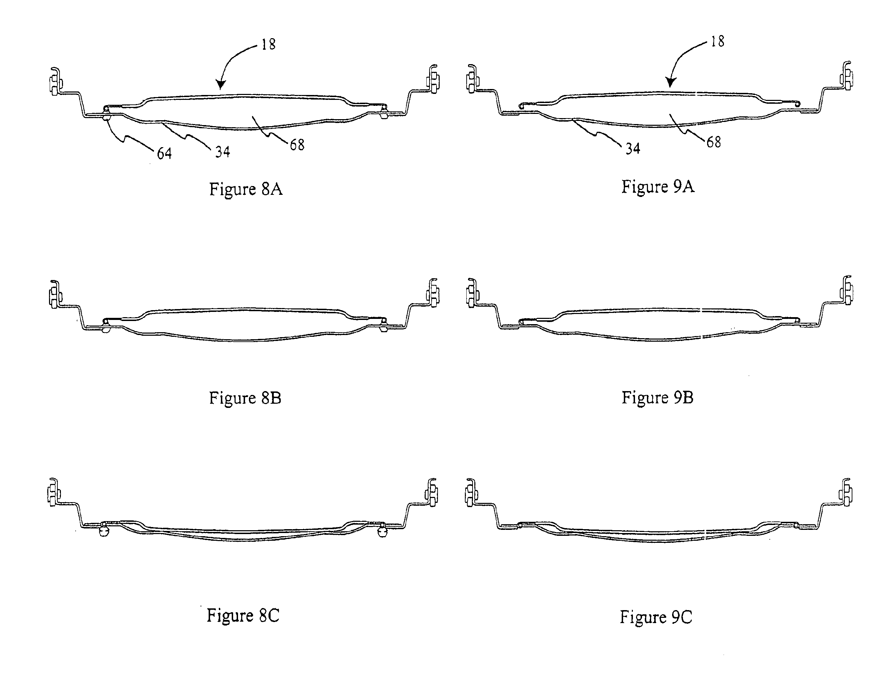

In each one of the embodiments, the support wire sections 56 space the lumbar support 18 from the crossbar 34. In the embodiment illustrated in Figure 1, the spacing is on the sides of the lumbar support 18, whereas in the other embodiments, the spacing is behind the lumbar support 18. As illustrated in Figures 2 and 8, clips 64 can be used to attachment the support wire sections 56 to the crossbar 34. Alternatively, there may be no attachment between the support wire sections 56 and the crossbar 34 as shown in Figures 6 and 9. As illustrated in Figure 7, clips can also attach a reaction plate 66 to the lumbar support 18. With the reaction plate situated between the lumbar support 18 and the crossbar 34, the reaction plate 66 can be attached to or integrally formed with the crossbar or it may not have any attachment to the crossbar.

Figures 8A and 9A illustrate the normal operating mode of the lumbar support, in which the support wire sections 56 provide a spatial distance 68 between the lumbar support 18 and the crossbar 34. In Figure 8A, the clips 64 attach the support wire sections 56 to the crossbar 34, whereas there is no connection between the crossbar 34 and the support wire sections 56 in Figure 9A. Figures 8B and 9B illustrate the impact condition where the support wire sections 56 have been driven back toward the crossbar 34 and there is no longer any spatial distance between the support wire sections 56 and the crossbar 34. As particularly illustrated in Figure 8B, the clips 64 are driven further into the crossbar 34. Figures 8C and 9C illustrate the impact condition where the lumbar support 18 has been driven back such that there is no longer any spatial distance and the lumbar support 18 impacts the cross bar 34.

The energy transfer mechanism typically includes a reaction plate and/or a reaction bar. As illustrated in Figure 1C, the lumbar support 18 can include a plate 70 which is operated during the normal modes of operation and which serves as a reaction plate to transfer the impact forces through the lumbar support 18 and to the crossbar 34 and the remainder of the energy transfer system. In this manner, it will be appreciated that the lumbar support is an integral part of the energy transfer system. The lumbar support 18 has a set of operating positions do not engage the side bars 30 in the energy transfer mechanism and another set of impact positions that are enga ge the side bars 30 in the energy transfer mechanism.

In Figure 3B, a side view of the lumbar 18 is shown relative to the crossbar 34 with one side of the seat frame 12 cut-away. In Figure 3C, the lumbar support 18 is removed from the illustration to particularly show the crossbar 34 within the seat frame 12.

As particularly illustrated in Figures 6 and 9A-9C, the lumbar support 18 can be integral with the active headrest system, but in the normal modes of operation for the lumbar support, there is no physical link with the energy transfer mechanism. Instead, the lumbar support has a spatial relationship, or a spatial link, with the energy transfer mechanism. The spatial link closes due to the force of a collision, thereby bringing the lumbar into direct contact with energy transfer mechanism. The lumbar support 18 in Figure 7 is also spaced from the energy transfer mechanism by the reaction plate 66 which may also be spaced from the energy transfer mechanism.

The connection between the seat frame 12 and the lumbar support 18 can be any type of hardware, such as links, brackets, snap-fit clips, springs, or any other equivalent fastener. To further aid in the flexibility and range of travel of the lumbar support 18, it is preferable for a bowden cable to connect the lumbar to any actuator that may be used for translation and/or curvature. Such an actuator can be a motorized actuator or a manual actuator. According to the present invention, any suitable energy transfer mechanism would be acceptable for the operation of the seating system. The structural elements can be made from metal, plastic, structural foam or any other equivalent material. Generally, the structure allows sufficient energy to be transferred through the lumbar support to the active headrest system for its proper activation.

As various modifications could be made in the constructions and methods herein described and illustrated without departing from the scope of the invention, it is intended that all matter contained in the foregoing description or shown in the accompanying drawings shall be interpreted as illustrative rather than limiting. For example, it will be appreciated that the spring links between the frame and the lumbar can be any type of compliant connection. Thus, the breadth and scope of the present invention should not be limited by any of the above-described exemplary embodiments, but should be defined only in accordance with the following claims appended hereto and their equivalents.

## Claims

1. A seating system, comprising:
a seat frame (12) comprising a pair of side rails (32) and a top beam (28);
a plurality of support wire sections (56) connected to said seat frame (12);
an energy transfer mechanism (14) comprising a pair of side bars (30), a pair of linkages (26), and a crossbar (34) connected between said pair of side bars (30), wherein said pair of side bars (30) extend along said side rails (32) from pair of linkages (26) proximate to said top beam (28) to said crossbar (34) distal from said top beam (28);
a headrest (16) supported by said top beam (28) of said seat frame (12) and connected to said energy transfer mechanism (14) through said pair of linkages (26);
a lumbar support (18) attached to said frame (12) through said plurality of support wire sections (56) and spaced from said crossbar (34) by said support wire sections (56); and
an actuator (20) operatively connected to said lumbar support (18), said actuator (20) moving said lumbar support (18) from a first position to a second position,
wherein said lumbar support (18) comprises a front side (48), a back side (50), a top section (52), a bottom section (54) and a middle section (40) therebetween, wherein a periphery of said lumbar support (18) is located inside said pair of side bars (30), said crossbar (34) connecting said pair of side bars (30),
wherein said middle section (40) is located proximate to said crossbar (34),
wherein said support wire sections (56) surround said periphery of said lumbar support (18) and attach said crossbar (34) to said lumbar support (18), said crossbar (34) comprising a pair of crossbar sections connected between said pair of side bars (30) through said support wire sections (56).

2. The seating system set forth in claim 1, wherein said crossbar (34) extends behind a back side (50) of said lumbar support (18) and said support wire sections (56) are located between said crossbar (34) and said lumbar support (18).

3. A seat support system, comprising:
a headrest (16);
an energy transfer mechanism (14) operatively connected to said headrest (16);
a lumbar support (18), said lumbar support (18) having a set of operating positions and a set of impact positions, wherein said set of operating positions is not in contact with said energy transfer mechanism (14) and wherein said set of impact positions is in contact with said energy transfer mechanism (14);
an actuator (20) operatively connected to said lumbar support (18), said actuator (20) moving said lumbar support (18) through said set of operating positions; and
a plurality of support wire sections (56) connected to said lumbar support (18),
wherein said energy transfer mechanism (14) further comprises a crossbar (34) connecting a pair of side bars (30), said pair of side bars (30) connected to said headrest (16) through a pair of linkages (26), said crossbar (34) situated behind said wire sections (56) and said lumbar support (18), and wherein said lumbar support (18) contacts said energy transfer mechanism (14) through said crossbar (34) in said set of impact positions.

4. The seating system set forth in claim 3, wherein said lumbar support (18) comprises a front side (48), a back side (50), a top section (52), a bottom section (54) and a middle section (40) therebetween, wherein a periphery of said lumbar support (18) is located inside said pair of side bars (30).

5. The seating system set forth in claim 3 or 4, further comprising a seat frame (12), wherein said headrest (16) is supported by said seat frame (12) and said plurality of support wire sections are attached to said seat frame (12).

6. The seating system set forth in claim 5, wherein said support wire sections (56) span said seat frame (12).

7. The seat support set forth in any one of claims 3-6, further comprising a plurality of clips (64) attaching said lumbar support (18) to said support wire sections (56) and said crossbar (34).
